# EUROPÄISCHE PATENTANMELDUNG

(11) **EP 3 680 131 A1**
(43) Veröffentlichungstag der Anmeldung: **15.07.2020**
(21) Anmeldenummer: 20150688.8
(22) Anmeldetag: 08.01.2020
(51) Int. Cl.: B60N 2/879, B60R 11/02, B60R 11/00, B60N 2/90

(54) **KOPFSTÜTZE UND KOPFSTÜTZENSYSTEM**

(30) Priorität: 11.01.2019 DE 102019000120
(71) Anmelder: GRAMMER AG, 92224 Amberg (DE)
(72) Erfinder: Bösl, Manuel, 92272 Freudenberg (DE); Redwitz, Marco, 93092 Barbing (DE)
(74) Vertreter: Roche, von Westernhagen & Ehresmann

(57) **Zusammenfassung**

Die Erfindung betrifft unter anderem eine Kopfstütze (12) für einen Fahrzeugsitz (11) mit einem Kopfanlageteil (21) welches mittels einer Halterung an dem Fahrzeugsitz (11) lagerbar ist oder welches einstückig mit einem Teil des Fahrzeugsitzes (11) ausgebildet ist, dass das Kopfanlageteil (21) wenigstens eine Projektorvorrichtung (26) aufweist, welche wenigstens eine Projektionseinheit (19a, 19b) umfasst, die mit einer Stromversorgung des Fahrzeugs verbindbar ist, mittels welcher eine Lichtinformation auf eine Projektionsfläche (22, 24) projezierbar ist.

## Beschreibung

Die Erfindung betrifft eine Kopfstütze für einen Fahrzeugsitz.

Aus dem Stand der Technik ist es bekannt, im Fahrzeuginnenraum Leuchten anzuordnen, die z.B. am Dachhimmel befestigt sind, die entweder diffus den ganzen Fahrzeuginnenraum bescheinen oder auch als Leselicht dienend auf einen bestimmten Bereich fokussiert sind. Mit diesen Leuchten ist lediglich eine Beleuchtung von Gegenständen oder von dem Fahrzeuginnenraum möglich.

Es war Aufgabe der Erfindung eine Kopfstütze zu entwickeln, mit welcher über die bloße Beleuchtung hinaus die Darstellung von Informationen möglich ist.

Die Aufgabe wurde gelöst durch eine Kopfstütze mit den Merkmalen des Anspruchs 1.

Die Kopfstütze umfasst ein Kopfanlageteil, welches mittels einer Halterung an einem Fahrzeugsitz lagerbar ist oder welches einstückig mit einem Teil des Fahrzeugsitzes ausgebildet ist. Das Kopfanlageteil weist wenigstens eine Projektorvorrichtung auf, die wenigstens eine Projektionseinheit umfasst, die mit einer Stromversorgung des Fahrzeugs verbindbar ist. Mit der Projektionseinheit können z.B. entsprechend einem sogenannten Beamer, Informationen auf eine Projektionsfläche projeziert bzw. in einem Projektionsbereich erstellt werden.

Die Projektionseinheit überträgt dabei z.B. Informationen durch Lichtstrahlung, die auf einer Projektionsfläche in einem Projektionsbereich, wie z.B. Oberfläche einer Wand, Rauch, Nebel, aufgrund von Reflektion abgebildet werden. Alternativ überträgt die Projektionseinheit eine Strahlung, wie z.B. Laserstrahlung, die ein zwei- oder dreidimensionales Hologramm in einem Projektionsbereich erzeugt, welches von den Insassen erkennbar ist. Das Hologramm bedarf nicht in jedem Fall einer Projektionsfläche im Sinne einer Reflektionsfläche. Mit der Strahlung kann z.B. aufgrund der Plasmarisierung der Luftmoleküle ein selbstleuchtendes Bild erzeugt werden.

Es ist nicht in allen Fällen erforderlich, dass die Projektionsfläche eben ist. Bei einer Übertragung von Lichtbildern ist es aber von Vorteil. Z.B. bei bloßen Hinweisen, wie z.B. Warnhinweisen, kann eine unebene Projektionsfläche ausreichen.

Es ist vorteilhaft, die Projektionseinheit in der Kopfstütze vorzusehen, weil die Projektionsrichtung der Ausrichtung und dem Blickbereich des Sitzinsassen entspricht und weil die Vorrichtung wenigstens teilweise platzsparend in der Kopfstütze angeordnet werden kann. Auf diese Weise kann der Sitzinsasse Informationen wahrnehmen, ohne seine Sitzposition zu verändern.

Die Projektionseinheit ist z.B. derart an dem Kopfanlageteil ausrichtbar, dass die Strahlung der Projektionseinheit auf eine Projektionsfläche oder in einem Projektionsbereich des Fahrzeuginnenraumes auftrifft. Eine Projektionsfläche kann z.B. von einem Fenster, Armaturenbrett, Fahrzeugsitz, Fahrzeughimmel, Rauch oder Nebel gebildet sein.

Wenn die Projektionseinheit mittels Strahlung ein selbstleuchtendes Hologramm erzeugt, kann dieses in einem Projektionsbereich des Innenraums an beliebiger geeigneter Stelle erzeugt werden. Eine Reflektionsfläche ist dann nicht notwendig.

Die Projektorvorrichtung umfasst z.B. eine Steuerung, die in Abhängig eines Signals einen bestimmten Strahlungszustand, wie z.B. Konstantstrahlung, Intervallstrahlung, unterschiedliche Strahlungsfarben, der Projektionseinheit steuert. Auf diese Weise ist es möglich, mittels der Projektorvorrichtung dem Sitzinsassen oder anderen Insassen des Fahrzeuginnenraums Informationen, Signale oder Bilder zu übermitteln. Diese Informationen können z.B. allgemeiner Art sein oder das Fahrzeug bzw. die Fahrsituation betreffen.

Z.B. umfasst die Projektorvorrichtung einen Sensor, der mit der Steuerung verbunden ist, mittels welchem ein Signal an die Steuerung übermittelbar ist. Der Sensor kann bestimmte Informationen aufnehmen und an die Steuerung weiterleiten, welche in Abhängigkeit des Signals des Sensors einen bestimmten Beleuchtungszustand an der Projektionseinheit ansteuert. Z.B. kann die Entfernung zu dem vor dem eigenen Fahrzeug fahrenden Fahrzeug von dem Sensor aufgenommen werden und an die Steuerung weitergegeben werden. Wenn ein Mindestabstand unterschritten wird, kann die Steuerung die Projektionseinheit derart ansteuern, dass von der Projektionseinheit ein Signal, z.B. in Form einer bestimmten Farbe oder eines Flackerlichts, ausgesendet und an anderer Stelle im Fahrzeuginnenraum abgebildet wird.

Die Projektorvorrichtung kann z.B. mit einem Computer, z.B. mit einem Fahrzeugcomputer, verbindbar sein und ein vom Computer erzeugtes Bild wird dann von der Projektionseinheit ausgestrahlt und an anderer Stelle abgebildet. Die Projektionseinheit kann z.B. ein Navigationsprogramm, z.B. auf der Projektionsfläche, abbilden.

Z.B. kann die Steuerung auch manuell betätigt werden, so dass die Projektionseinheit als reines Leselicht an- und ausstellbar ist.

Die Erfindung betrifft auch ein Kopfstützensystem mit einer Kopfstütze gemäß dem ersten Aspekt der Erfindung sowie mit einer Projektionsfläche, die an geeigneter Stelle in dem Fahrzeuginnenraum ausgebildet ist. Einfache Informationen können fast auf jeder Art von Projektionsfläche abgebildet werden. Bei detaillierten Informationen, ist es vorteilhaft, wenn im Fahrzeug eine Projektionsfläche vorhanden ist, die eine Darstellung von detaillierten Informationen ermöglicht. Dies kann z.B. eine stationär vorgesehene geeignete Fläche sein, die z.B. im Armaturenbrett oder an anderer Stelle im Fahrzeug angeordnet ist oder alternativ eine Fläche sein, die lediglich im Falle des Betriebs der Projektionseinheit aktiviert wird.

Z.B. ist die Projektionsfläche einer Aufspannvorrichtung zugeordnet, mittels welcher die Projektionswand zwischen einer Stauposition und einer aufgespannten Position bewegbar ist. Das hat den Vorteil, dass bei Nichtbenutzung der Projektionseinheit die Projektionswand keinen Platz im Fahrzeug einnimmt und bei Betrieb der Projektionseinheit eine bessere Darstellung möglich ist.

Z.B. ist auch eine von einer Vorrichtung erzeugte Rauch- oder Nebelschwade als Projektionsfläche geeignet.

Jede Projektionseinheit ist z.B. einer separaten Projektionsfläche zugeordnet. Alternativ sind mehrere Projektionseinheiten einer Projektionsfläche zugeordnet.

Die Projektionsfläche ist z.B. transparent. In diesem Fall können zusätzlich zu den von der Projektionseinheit übertragenen Informationen auch andere Informationen hinter der Projektionsfläche von den Insassen wahrgenommen werden.

Weitere Vorteile ergeben sich anhand eines in den Figuren dargestellten Ausführungsbeispiels. Es zeigen:
Fig. 1 eine perspektivische Darstellung eines Fahrzeugsitzes einschließlich eines erfindungsgemäßen Kopfstützensystems,
Fig. 2 eine rückwärtige perspektivische Darstellung des Fahrzeugsitzes gemäß Fig. 1,
Fig. 3 eine zweite Ausführungsform die sich von dem ersten Ausführungsbeispiel unterscheidet indem die Projektionsvorrichtung zwei Projektionswände aufweist.

Das erfindungsgemäße Kopfstützensystem insgesamt ist in den Figuren mit dem Bezugszeichen 10 bezeichnet. Gleiche Bezugszeichen in den unterschiedlichen Figuren bezeichnen entsprechende Teile, auch wenn kleine Buchstaben hinzugefügt oder weggelassen sind.

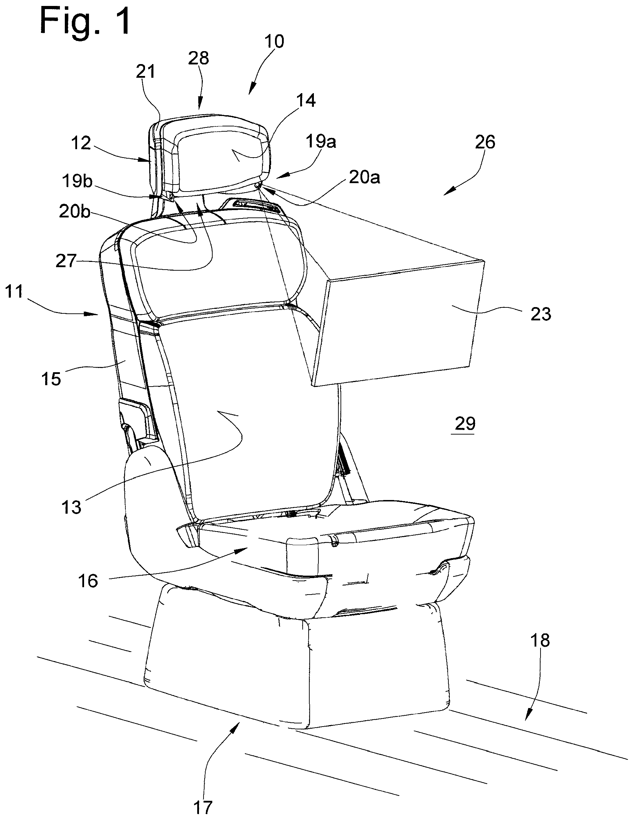

In Fig. 1 ist ein Fahrzeugsitz 11 mit einem Sitzbereich 16, einer Rückenlehne 15 und einer Kopfstütze 12 dargestellt, welcher in einem Fahrzeuginnenraum 29 angeordnet ist. Die Kopfstütze 12 umfasst ein Kopfanlageteil 21 mit einer Anlagefläche 14 für den Kopf des Sitzinsassen. Die Rückenlehne 15 umfasst eine Anlagefläche 13. Der Fahrzeugsitz 11 ist mittels einer Befestigungsvorrichtung 17, z.B. mittels einer verstellbaren Schienenlagerung, an dem Fahrzeugboden 18 befestigt, der in Fig. 1 lediglich angedeutet ist.

Die Kopfstütze 12 umfasst eine Projektorvorrichtung 26 mit Projektionseinheiten 19a und 19b, die im vorliegenden Ausführungsbeispiel jeweils einem sogenannten Beamer entsprechenund Lichtstrahlung übertragen. Alternativ könnten die Projektionseinheiten 19a und 19b auch eine andere Strahlung, wie z.B. Laserstrahlung, aussenden.

Durch Projektionsöffnungen 20a und 20b in dem Kopfanlageteil 21, die in dem vorliegenden Ausführungsbeispiel an einem unteren Endbereich 27 des Kopfanlageteils 21 in Seitenbereichen angeordnet sind, können die Projektionseinheiten 19a und 19b, die in einem Innenraum des Kopfanlageteils 21 angeordnet sind, die Lichtinformation nach außen projezieren. Alternativ könnten die Projektionsöffnungen 20a und 20b auch an einem anderen Bereich des Kopfanlageteils 21 angeordnet sein, z.B. höher an den Seitenbereichen oder an einem oberen Endbereich 28. Anstelle der zwei Projektionseinheiten 20a und 20b könnte die Projektionsvorrichtung 26 z.B. auch lediglich eine Projektionseinheit aufweisen.

Mit jeder Projektionseinheit 19a und 19b sind Lichtinformationen auf eine Projektionsfläche 22 einer Projektionswand 23 projezierbar. Die Projektionswand kann bei lediglich einfachen Lichtinformationen z.B. von dem Fahrzeugfenster, oder von der Armaturentafel gebildet sein. Bei detaillierteren Lichtinformationen, wie z.B. Bilddarstellungen, ist es vorteilhaft, wenn die Bildinformation auf einer speziell dafür bereitgestellten Fläche abgebildet werden.

Alternativ wird z.B. von wenigstens einer der Projektionseinheiten 19a und 19b ein Hologramm z.B. durch Laserstrahlung erzeugt. In diesem Fall ist keine Projektionswand notwendig. Die Abbildung ist dann zweidimensional oder dreidimensional an beliebiger Position im Raum möglich.

Die Projektionsfläche kann stationär in dem Fahrzeuginnenraum ausgebildet sein. Alternativ kann die Projektionsfläche 22 von einer Projektionswand 23 bereitgestellt werden, die im Falle einer Aktivierung der Projektionseinheit 19a und / oder 19b aus einer Stauposition in eine aufgespannte Position verstellt wird und die dann die Projektionsfläche 22 ausbildet.

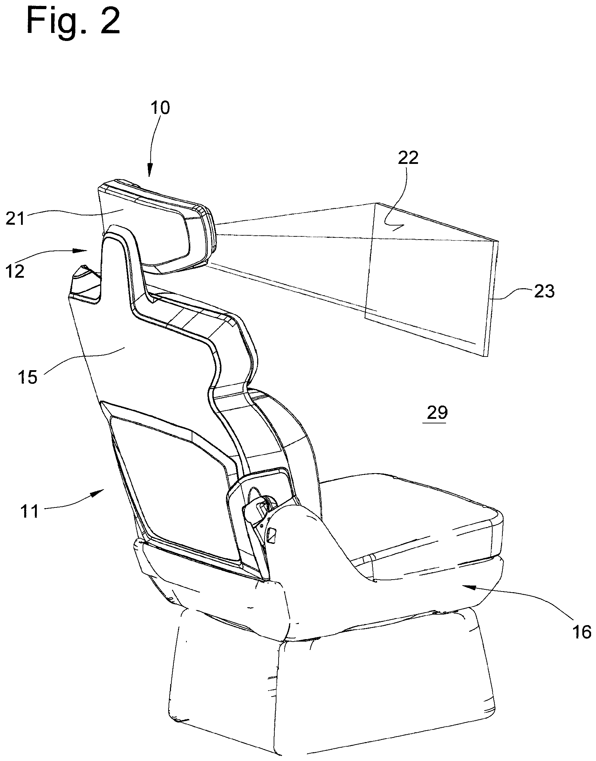

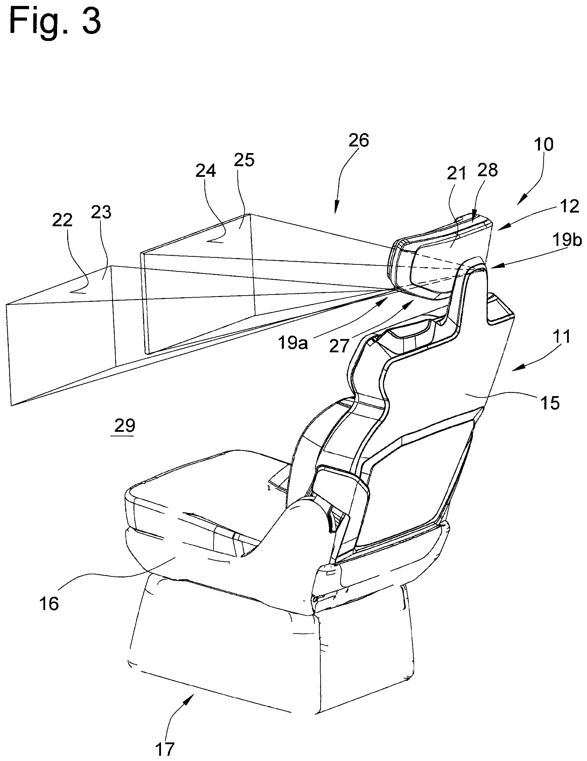

In dem Ausführungsbeispiel gemäß der Fig. 1 und 2 projezieren die beiden Projektionseinheiten 19a und 19b ihre Lichtinformation auf die Projektionsfläche 22. Gemäß einer alternativen Ausgestaltung der Erfindung projeziert die Projektionseinheit 19a ihre Lichtinformation auf eine erste Projektionsfläche 22 die Projektionseinheit 19b projeziert unabhängig von der ersten Projektionseinheit 19a eine Lichtinformation auf eine zweite Projektionsfläche 24 einer zweiten Projektionswand 25 (siehe Fig. 3).

## Patentansprüche

1. Kopfstütze (12) für einen Fahrzeugsitz (11) mit einem Kopfanlageteil (21) welches mittels einer Halterung an dem Fahrzeugsitz (11) lagerbar ist oder welches einstückig mit einem Teil des Fahrzeugsitzes (11) ausgebildet ist, dass das Kopfanlageteil (21) wenigstens eine Projektorvorrichtung (26) aufweist, welche wenigstens eine Projektionseinheit (19a, 19b) umfasst, die mit einer Stromversorgung des Fahrzeugs verbindbar ist, mittels welcher eine Strahlung, wie z.B. Lichtinformation oder Laserstrahlung auf einen Projektionsbereich projezierbar ist.

2. Kopfstütze nach Anspruch 1, **dadurch gekennzeichnet, dass** die Projektionseinheit (19a, 19b) derart an dem Kopfanlageteil (21) ausrichtbar ist, dass die Lichtinformation auf eine Projektionsfläche (22, 24) des Fahrzeuginnenraums, wie Fenster, Armaturenbrett, Fahrzeugsitz, Fahrzeughimmel, auftrifft.

3. Kopfstütze nach Anspruch 1, **dadurch gekennzeichnet, dass** die Projektionseinheit (19a, 19b) eine Strahlung überträgt, die im Fahrzeuginnenraum ein selbstleuchtendes Hologramm erzeugt.

4. Kopfstütze nach einem der vorangehenden Ansprüche, **dadurch gekennzeichnet, dass** die Projektorvorrichtung (26) eine Steuerung umfasst, welche in Abhängigkeit eines empfangenen Signals einen Strahlungszustand, wie Konstantstrahlung, Intervallstrahlung, Farbe der Strahlung, steuert.

5. Kopfstütze nach Anspruch 4, **dadurch gekennzeichnet, dass** die Projektorvorrichtung (26) wenigstens einen mit der Steuerung verbundenen Sensor umfasst, mittels welchem ein Signal an die Steuerung übermittelbar ist.

6. Kopfstütze nach einem der vorangehenden Ansprüche, **dadurch gekennzeichnet, dass** die Projektorvorrichtung (26) mit einem Computer verbindbar ist und dass ein vom Computer erzeugtes Bild von der Projektionseinheit (19a, 19b) in dem Projektionsbereich (22, 24) abbildbar ist.

7. Kopfstütze nach einem der vorangehenden Ansprüche, **dadurch gekennzeichnet, dass** die Steuerung zusätzlich manuell betätigbar ist.

8. Kopfstützensystem (10) umfassend eine Kopfstütze (12) gemäß einem der vorangehenden Ansprüche sowie eine Projektionsfläche (22, 24) des Fahrzeuginnenraums.

9. Kopfstützensystem nach Anspruch 8, **dadurch gekennzeichnet, dass** die Projektionsfläche (22, 24) einer Aufspannvorrichtung zugeordnet ist, mittels welcher die Projektionsfläche (22, 24) zwischen einer Stauposition und einer aufgespannten Position bewegbar ist.

10. Kopfstützensystem nach einem der Ansprüche 8 oder 9, **dadurch gekennzeichnet, dass** jede Projektionseinheit (19a, 19b) einer separaten Projektionsfläche (22, 24) zugeordnet ist.

11. Kopfstützensystem nach einem der Ansprüche 8 bis 10, **dadurch gekennzeichnet, dass** mehrere Projektionseinheiten (19a, 19b) einer Projektionsfläche (22) zugeordnet sind.
